# EUROPEAN PATENT APPLICATION

(11) **EP 4 442 742 A1**
(43) Date of publication of application: **09.10.2024**
(21) Application number: 23859540.9
(22) Date of filing: 27.07.2023
(51) Int. Cl.: C08J 5/22, C25B 9/23, C25B 11/055, H01M 8/00, B01D 71/00, B01D 69/00

(54) **METHOD FOR OBTAINING A CATALYTIC MEMBRANE, CATALYTIC MEMBRANE OBTAINED AND USES THEREOF**

(30) Priority: 02.09.2022 ES 202230785
(71) Applicant: Universidad de Murcia, 30003 Murcia (ES)
(72) Inventor: HERNÁNDEZ FERNÁNDEZ, Francisco José, 30003 MURCIA (ES); PÉREZ DE LOS RÍOS, Antonia, 30003 MURCIA (ES)
(74) Representative: Herrero & Asociados, S.L.
(86) International application number: PCT/ES2023/070487
(87) International publication number: WO 2024/047264

(57) **Abstract**

Calcined or pyrolyzed metal compounds immobilized in membranes based on ionic liquids and/or eutectic solvents. The invention relates to new catalytic membranes synthesized from ionic liquids or deep eutectic solvents and oxidized or pyrolyzed immobilized metal compounds in the membranes. The use of these new catalytic membranes in oxidation/reduction reactions, for application in fuel cells and in water electrolyzers for hydrogen production, is described.

## Description

### OBJECT OF THE INVENTION

The present invention relates to a procedure for obtaining a catalytic membrane, the catalytic membrane obtained by said procedure, and the possible uses given to the membrane. The membranes of the invention have catalytic capability in oxidation/reduction reactions.

### BACKGROUND OF THE INVENTION

A hydrogen fuel cell (HFC) or an electrolyzer for hydrogen production (EH) are devices composed of two chambers, an anodic and a cathodic, separated by a proton exchange membrane (PEM). In the HFC, oxygen and hydrogen combine, resulting in the production of electrical energy, residual thermal energy, and water. In the EH, the reverse process occurs by supplying external electrical energy: water molecules decompose into oxygen and hydrogen, also generating some residual thermal energy.

One of the barriers to the commercialization of these devices (HFC and EH) is the high cost of the catalyst used, generally platinum (Pt), and the PEM, typically a perfluorinated organic polymer, specifically perfluorosulfonic acid (PFSA) membranes based on a PFSA/polytetrafluoroethylene (PTFE) copolymer.

The slowness of cathodic and anodic reactions in HFCs and EHs necessitates the use of catalysts. Pt is the most commonly used metal. However, the high cost of this metal limits its practical application. Therefore, new strategies are being researched to reduce or eliminate its use through the development of new nanostructured chemical catalysts based on non-noble metals, similar to Pt in reaction speed but much cheaper, to facilitate the development of these technologies and their implementation on an industrial scale.

In this regard, the current state of the art includes specific references to the development and testing of catalysts based on metal compounds described as follows: (i) mixed valence spinel-type catalysts based on Cu/Co and Ni/Co oxides and perovskite-type; (ii) catalysts based on MnO2; (iii) catalysts based on amorphous and crystalline TiO2 nanotubes; (iv) catalysts based on ferroelectric materials such as LiTaO3 and Li0.95Ta0.57Nb0.38Cu0.15O3; and (iv) catalysts based on activated carbon. The state of the art describes the use of these catalytic materials only in microbial fuel cells (MFCs). A microbial fuel cell is a device that uses microorganisms to convert chemical energy into electrical energy. The device is an electrochemical cell in which microorganisms decompose organic matter at the anode, producing electrons and protons. The generation of electrical current is made possible by keeping the microorganisms separated from oxygen. The generated electrons circulate through an external circuit, producing electrical energy. Protons cross the cation exchange membrane and combine with electrons and oxygen at the cathode, producing water.

As an alternative to conventional PEM membranes, two generations of membranes based on ionic liquids have been developed, also described only for MFC applications: (i) supported liquid membranes based on ionic liquids and (ii) inclusion polymer membranes based on ionic liquids. The advantage of the latter over the former is that they allow for immobilizing a larger amount of active phase (ionic liquid), increasing their stability as the organic liquid is occluded in the organic polymer. In the former, immobilization is by adsorption onto the support. These materials are also known as ionogels, being composed of an ionic liquid (IL) and an organic or inorganic polymer matrix.

In recent years, the use of catalysts supported in Ionic Liquids (ILs) as new catalytic materials has been described, such as TiO2 nanoparticles for certain applications. Metals have also been immobilized in ionogels (a mixture of ILs and organic polymers) as chemical catalysts. For example, Pt (0) or Rh (0) nanoparticles were immobilized in an ionogel based on the IL 1-butyl-3-methylimidazolium bis(trifluoromethylsulfonyl)amide and the organic polymer cellulose acetate. The catalytic derivative was used in the hydrogenation of cyclohexene. In these cases, the catalyst is synthesized and then immobilized in the ionic liquid.

Regarding ILs, due to their intrinsic properties such as high conductivity, non-flammability, good electrochemical performance, and thermal stability, they have been used as electrolytes in electrochemical devices such as batteries, fuel cells, solar cells, and sensors.

The use of organic and inorganic nanoparticles in mixtures with ILs as electrolytes has also been described to increase the chemical, mechanical stability, and ionic conductivity of these materials. An example is patent WO2013009731, which describes a method for preparing an ionic liquid with metal nanoparticles that includes the in situ formation of a metal oxide nanoparticle in solution by reacting a metal oxide precursor material, followed by the in situ reaction of the metal oxide nanoparticle in solution with an ionic liquid coupling agent, such that the ionic liquid is attached to a single metal oxide nanoparticle, thereby preventing the agglomeration of the metal oxide nanoparticles.

The document "Metal nanoparticle/ionic liquid/cellulose: New catalytically active membrane materials for hydrogenation reactions"; Gelesky, Scheeren; Foppa et al. (13/07/2009*)* describes the combination of metal nanoparticles dispersed in an ionic liquid with an organic polymer membrane. The metals used are high-priced noble metals, such as Pt and Rh. The nanoparticles acting as catalysts are dispersed in the ionic liquid and mixed with the organic polymer. It would be interesting to use cheaper, but equally effective metals.

As seen in the state of the art, there is still a need to develop new, more economical catalytic membranes that are at least as efficient.

### DESCRIPTION OF THE INVENTION

The present invention describes a procedure for obtaining catalytic membranes capable of catalyzing the synthesis reactions of H2O from oxygen and hydrogen and the breakdown of H2O to generate hydrogen and oxygen. Therefore, these membranes are suitable for EH and HFC devices, acting as proton transporters between their anodic and cathodic chambers. The catalytic membranes of the invention are at least as effective as other catalytic membranes in the state of the art but are more economical.

To improve the catalyst activity and its dispersion in the membrane, in the present invention, the catalyst is activated in situ from a catalyst precursor through a pyrolysis and/or calcination stage. This is an improvement over known methods where the catalyst is first obtained and then immobilized in the membrane. Additionally, by enhancing the membrane's activity through improved catalyst activity, the use of highly effective but expensive noble metals such as Au, Pt, Rh, Ru, Ir, Os, Pd can be avoided, achieving good results and reducing the catalytic membrane's cost.

The membrane is based on an ionic liquid (IL) and/or a deep eutectic solvent (DES) combined with a non-perfluorinated organic polymer that supports the IL and/or DES. Any IL and/or DES can be used in the present invention due to the thermal stability of these components, which is the necessary characteristic for the present invention and is common to all of them. These components are stable at some point within the range of 100°C to 500°C, allowing the in situ activation of the catalyst without deteriorating the membrane. Additionally, in the present membrane, the IL and/or DES is the proton transporter, thus avoiding the use of more expensive perfluorinated polymers than the non-perfluorinated organic polymer used in the present invention's membrane.

Ionic liquids (ILs) are salts that are in a liquid state at room temperature or close to it. The term Deep Eutectic Solvents (DES) refers to those liquids near the eutectic composition of their mixtures, i.e., the molar ratio of the components that gives the lowest melting point. DESs are characterized by having a melting point below 150°C, although most have a melting point between room temperature and 70°C. DESs, unlike ILs, can be composed of non-ionic species. ILs and DESs have very interesting physical and chemical properties, notably their low vapor pressure and excellent thermal and chemical stability.

ILs and/or DESs allow the production of stable materials while providing some mobility of constituent elements, facilitating proton transport phenomena and process kinetics. Membranes prepared with ILs and/or DESs allow: (i) increased material stability compared to other forms of catalyst immobilization in the membrane; (ii) increased immobilized catalyst quantity as it is immobilized throughout the membrane volume, not just the surface; and (iii) increased catalyst activity and stability due to interactions with the IL and/or DES. Additionally, these materials do not present fouling problems and can thus be considered "antifouling."

The catalyst for the reactions of synthesizing H₂O from oxygen and hydrogen and the breakdown of H₂O to generate hydrogen and oxygen is activated from a catalyst precursor that is metallic compounds of a metal other than Au, Pt, Rh, Ru, Ir, Os, and Pd. This activation is carried out through a pyrolysis and/or calcination step in a temperature range between 100°C and 500°C. Surprisingly, in the temperature range defined in the procedure, lower than usual in pyrolysis and/or calcination reactions, a very efficient catalyst is obtained, with the ionic liquid (IL) and/or a deep eutectic solvent (DES) remaining undegraded. The catalyst precursor is a metallic compound that, after activation, is immobilized in the membrane by occlusion. In the present invention, a membrane has been developed that, thanks to the catalyst being activated in situ, improves its efficacy, avoiding the need for the more expensive noble metals like Au, Pt, Rh, Ru, Ir, Os, and Pd, which until now were the ones that offered the best results.

The organic polymer used in the procedure for obtaining the membrane, which is mixed with the already activated catalyst, is a non-perfluorinated organic polymer; this also reduces the final membrane cost, as perfluorinated polymers are preferably used in the state of the art. Moreover, when using perfluorinated polymers as usual in the state of the art, a hydration step is necessary, which is not required in the present invention. In the present invention, the organic polymer is a support for IL and/or DES.

Therefore, a first aspect of the invention is a procedure for obtaining proton exchange catalytic membranes comprising the following stages:
a) mixing at least one metallic compound, precursor of a catalyst for the reactions of synthesizing H₂O from oxygen and hydrogen and breaking down H₂O to generate hydrogen and oxygen, with at least one ionic liquid and/or a deep eutectic solvent, where the metal of the metallic compound is neither Au, nor Pt, nor Rh, nor Ru, nor Ir, nor Os, nor Pd;
b) activating the catalyst precursor through a calcination and/or pyrolysis step at a temperature between 100°C and 500°C of the mixture obtained in stage a) to obtain the catalyst in said mixture;
c) mixing the product obtained in the previous stage with a non-perfluorinated organic polymer adding a co-solvent to facilitate dissolution;
d) pouring the previous mixture onto a surface to allow the evaporation of the co-solvent and the formation of the membrane with the catalyst occluded in it.

As used here, the term "catalyst precursor" refers to a metallic compound that can be converted into an active catalyst.

As used here, the term "catalyst" refers to a component that causes or accelerates the reactions of synthesizing H₂O from oxygen and hydrogen and breaking down H₂O to generate hydrogen and oxygen.

The term "calcination" refers to the thermal treatment, in an atmosphere of air or oxygen, of the metallic compound to cause its thermal decomposition and/or a change of state, usually an oxidation process. This process is carried out at temperatures below the melting point of the material.

The term "pyrolysis" refers to a thermal treatment in the absence of oxygen at high temperatures, which produces a thermal decomposition and reorganization of the molecule.

Aspects of the invention also include the catalytic membrane obtainable according to the procedure of the invention and the use of the catalytic membrane of the invention in devices employing proton exchange membranes, i.e., in fuel cells and in water electrolyzers for hydrogen production. Additionally, aspects of the invention include hydrogen fuel cells and electrolyzers for hydrogen production that comprise the membrane of the invention.

The reactions of synthesizing H₂O from oxygen and hydrogen and breaking down H₂O to generate hydrogen and oxygen are preferably the reactions that occur in a hydrogen fuel cell (HFC) or in an electrolyzer for hydrogen production (EH).

The reactions that occur in the electrolyzer for hydrogen production are:
at the cathode:

   2H++2e-→H2
at the anode:

   H2O→21O2+2H++2e-

The reactions in the hydrogen fuel cell are: at the cathode:

21O2+2H++2e-→H2O

at the anode:

H2→2H++2e-

Non-limiting examples of the metal compound precursor of a catalyst for the synthesis reactions of H2O from oxygen and hydrogen and the breakdown of H2O to generate hydrogen and oxygen are: nitrogen compounds coordinated to metals, metals coordinated to conductive polymers, and metal salts.

The preferred ligands in nitrogen compounds coordinated to metals include porphyrins or porphyrin derivatives such as tetraphenylporphyrin. Other examples of ligands include five- or six-membered heterocyclic rings containing nitrogen. The preferred ligands are: polyacrylonitrile, phthalocyanines, pyrrole, substituted pyrroles, polypyrroles, pyridine, substituted pyridines, bipyridyls, imidazole, substituted imidazoles, pyrimidine, substituted pyrimidines, acetonitrile, o-phenylenediamines, bipyridines, p-phenylenediamines, and cyclams. Particularly cobalt porphyrin complexes.

Preferably, the conductive polymers coordinated to metals are selected from: polypyrroles, polyanilines, polythiophenes.

As for metal salts, examples of catalyst precursors include, but are not limited to, salts such as: nitrate, acetate, citrate, chloride, fluoride, bromide, iodide, sulfates, hydroxides, carbonates, and mixtures thereof. For example, the catalyst precursor may be a metallocene, a metal acetylacetonate, a metal phthalocyanine, a metal porphyrin. Particularly, the metal compound is a metal halide or a mixture thereof or a metal porphyrin.

In the case of nitrogen compounds coordinated to metals and metals coordinated to conductive polymers, they are subjected to pyrolysis, while in the case of metal salts, they are subjected to calcination.

The metal in the "metal compound" precursor of the catalyst is a metal compound of a metal that is neither Au, Pt, Rh, Ru, Ir, Os, nor Pd.

Examples of metals include, but are not limited to, transition metals, lanthanide metals, actinide metals, and combinations thereof. For example, the catalyst may comprise a transition metal such as chromium (Cr), molybdenum (Mo), tungsten (W), iron (Fe), cobalt (Co), nickel (Ni), cadmium (Cd), scandium (Sc), yttrium (Y), lanthanum (La). Particularly Co and Cu and their mixtures.

Particularly, the metal compound precursor of a catalyst for the synthesis reactions of H2O from oxygen and hydrogen and the breakdown of H2O to generate hydrogen and oxygen is a mixed oxide of Co and Cu or cobalt porphyrin.

Preferably, the ratio between the catalyst precursor and the ionic liquid and/or deep eutectic solvent is in the range of 0.01 % w/w to 20% w/w, more preferably between 0.01 % w/w and 5% w/w.

The ILs used in the present invention include, but are not limited to: aromatic and quaternary heterocycles of 5 and 6 members, such as imidazolium salts, pyridinium salts, pyrimidinium salts, non-aromatic heterocycles of 5 and 6 members, such as piperidinium salts, morpholinium salts, pyrrolidinium salts, and quaternary ammonium salts, quaternary phosphonium salts, and ternary sulfonium salts, and the like.

In a preferred embodiment, ILs are selected from general formulas I-VIII:

| Formula I | Formula II | Formula III |
|---|---|---|
| 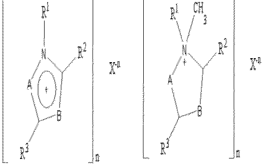 | 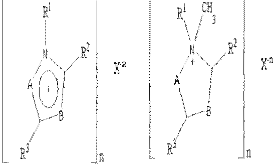 | 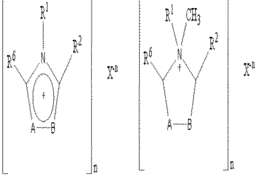 |

| Formula IV | Formula V |
|---|---|
| 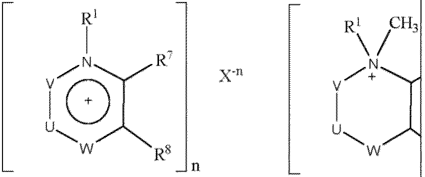 | 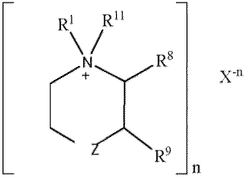 |

| Formula VI | Formula VII | Formula VIII |
|---|---|---|
| 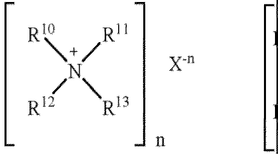 | 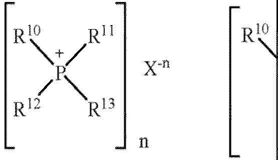 | 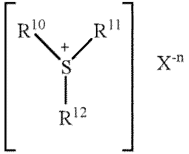 |

wherein:
A is selected from -N- or -C(R4)-;
B is selected from -O-, -S-, or -N(R5)-;
U, V, and W can be selected from -N- or C(R10)-, provided that U and V are not simultaneously -N-;
Z is selected from -O- or N(R12).

R1-R16 are the same or different and where R1-R16 is selected from hydrogen, a C1-C18 alkyl group, C2-C18 alkenyl, C2-C18 alkynyl, substituted C1-C18 alkyl, substituted C1-C18 alkenyl, substituted C1-C18 alkynyl, C3-C8 cycloalkyl, C3-C8 cycloalkenyl, aryl, substituted aryl, aryl(C1-C4 alkyl), or substituted aryl(C1-C4 alkyl). Preferably, R1-R16 are the same or different and wherein R1-R16 is selected from hydrogen, a C1-C6 alkyl group, C2-C6 alkenyl, C2-C6 alkynyl, substituted C1-C6 alkyl, substituted C1-C6 alkenyl, substituted C1-C6 alkynyl, C3-C6 cycloalkyl, C3-C6 cycloalkenyl, aryl, substituted aryl, aryl(C1-C4 alkyl), or substituted aryl(C1-C4 alkyl).

In a preferred embodiment, X is selected from the anions: hydroxide, chloride, bromide, iodide, borate, tetrafluoroborate, cuprate, Cu(I)Cl2, phosphate anion, hexafluorophosphate, hexafluoroantimonate, perchlorate, nitrate, sulfate, carboxylate, sulfonate, sulfoimide, phosphate, alkylcarbonate, dicyanamide, thiocyanate, and tricyanomethanide; n is an integer from 1 to 4.

In the present invention, the term "C1-C18 alkyl" refers to a monovalent linear or branched chain of one to eighteen carbon atoms, such as butyl, octyl, 2-methyldodecyl, and the like.

In the present invention, the term "substituted C1-C18 alkyl" refers to a C1-C18 alkyl chain as described above, wherein one or more hydrogen atoms in the alkyl chain are replaced with monovalent groups, such as halide, haloalkyl, alkoxy, haloalkoxy, alkylthio, haloalkylthio, alkylamino, alkanoyl, cyano, nitro, and the like.

In the present invention, the term "C2-C18 alkenyl" refers to a monovalent linear or branched chain of two to eighteen carbon atoms containing one or more double bonds, for example, ethenyl, 2-propenyl, 3-methyl-3-butenyl, and the like.

In the present invention, the term "substituted C2-C18 alkenyl" refers to a C2-C18 alkenyl as described above, wherein one or more hydrogen atoms in the alkyl chain are replaced with monovalent groups, such as halo, haloalkyl, alkoxy, haloalkoxy, alkylthio, haloalkylthio, alkylamino, alkanoyl, cyano, nitro, and the like.

In the present invention, the term "C2-C18 alkynyl" refers to a monovalent linear or branched chain of two to eighteen carbon atoms containing one or more triple bonds, for example, ethynyl, 2-propynyl, 3-methyl-3-butynyl, and the like.

In the present invention, the term "substituted C2-C18 alkynyl" refers to a C2-C18 alkynyl as described above, wherein one or more hydrogen atoms in the alkyl chain are replaced with monovalent groups, such as halo, haloalkyl, alkoxy, haloalkoxy, alkylthio, haloalkylthio, alkylamino, alkanoyl, cyano, nitro, and the like.

In the present invention, the term "C2-C8 cycloalkyl" refers to a monovalent linear chain of two to eight carbon atoms forming a cyclic structure, such as cyclopropyl, cyclohexylmethyl, α-methyl-2-methylcyclopentylmethyl, and the like.

In the present invention, the term "C3-C8 cycloalkenyl" refers to a monovalent chain of three to eight carbon atoms containing one or more double bonds forming a cyclic structure, such as 2-cyclopropylethenyl, cyclohex-2-enylmethyl, α-methyl-5-methylcyclopent-2-enylmethyl, and the like.

In the present invention, the term "aryl" refers to a cyclic aromatic radical such as phenyl, naphthyl, pyridyl, and the like, which may optionally contain one or more heteroatoms, such as oxygen, nitrogen, and sulfur.

In the present invention, the term "substituted aryl" refers to the aryl radical described above, wherein one to three hydrogen atoms of the aryl are substituted with monovalent groups, such as halide, alkyl, haloalkyl, alkoxy, haloalkoxy, alkylthio, haloalkylthio, alkylamino, alkanoyl, cyano, nitro, and the like.

In the present invention, the term "halo" refers to one or more halogen substituents belonging to the group consisting of fluorine, chlorine, bromine, and iodine. In the present invention, the term "alkoxy" refers to a monovalent linear or branched chain of carbon and oxygen atoms, such as methoxy, butoxy, 2,4-dimethylbutoxy, and the like.

In the present invention, the term "alkylthio" refers to a monovalent linear or branched chain of carbon and sulfur atoms, such as methylthio, butylthio, 2,4-dimethylbutylthio, and the like.

In the present invention, the term "alkylamino" refers to one or two independent alkyl groups, each being a monovalent linear or branched chain of carbon and nitrogen atoms, such as methylamino, dibutylamino, N-(2,4-dimethylbutyl)-N-methylamino, and the like.

In the present invention, the term "alkanoyl" refers to a monovalent linear or branched chain of carbon atoms and a carbonyl group, such as acetyl, butanoyl, 2,4-dimethylbutanoyl, and the like.

It will be appreciated that the above terms can be combined to form new chemical structures. Therefore, "haloalkyl" refers to an alkyl, as defined above, substituted with a halogen group, also defined above, for example, trifluoromethyl, 2,2-difluoro-1-bromoethyl, 3,3,3,2,1,1-heptafluoro-2-trifluoromethylpropyl, and the like.

Among carboxylate anions are included alkylcarboxylates, such as acetate, substituted alkylcarboxylates, such as lactate, and haloalkylcarboxylates, such as trifluoroacetate, and the like.

Among carbonate anions are included alkylcarbonates, such as methylcarbonates, and substituted alkylcarbonates.

Among sulfonate anions are included alkyl sulfonates such as mesylate, haloalkylsulfonates such as triflate and nonaflate, and aryl sulfonates such as tosylate, mesylate, and the like.

Among sulfonimide anions are included mono- or disubstituted sulfonimides, such as methanesulfonimide and bisethanesulfonimide, and halogenated sulfonimides, such as bis(trifluoromethanesulfonimide), arylsulfonimides, such as bis(4-methoxybenzene)sulfonamide, and the like.

Among phosphonate anions are included alkylphosphonates, such as tert-butylphosphonate, arylphosphonates, such as 3,4-dichlorophenylphosphonate, and the like.

Illustrative examples of such compounds include 1-ethyl-3-methylimidazolium chloride, 1-butyl-3-ethylimidazolium chloride, 1-butyl-3-methylimidazolium chloride, 1-butyl-3-methylimidazolium bromide, 1-methyl-3-propylimidazolium chloride, 1-methyl-3-hexylimidazolium chloride, 1-methyl-3-octylimidazolium chloride, 1-methyl-3-decylimidazolium chloride, 1-methyl-3-dodecylimidazolium chloride, 1-methyl-3-hexadecylimidazolium chloride, 1-methyl-3-octadecylimidazolium chloride, 1-ethylpyridinium bromide, 1-ethylpyridinium chloride, 1-butylpyridinium chloride, 1-benzylpyridinium bromide, 1-butyl-3-methylimidazolium tetrafluoroborate, 1-butyl-3-methylimidazolium iodide, 1-butyl-3-methylimidazolium nitrate, 1-ethyl-3-methylimidazolium tetrafluoroborate, 1-ethyl-3-methylimidazolium bromide, 1-ethyl-3-methylimidazolium iodide, 1-ethyl-3-methylimidazolium nitrate, 1-butylpyridinium tetrafluoroborate, 1-butylpyridinium bromide, 1-butylpyridinium iodide, 1-butylpyridinium nitrate, 1-butylimidazolium hexafluorophosphate, 1-octyl-3-methylimidazolium tetrafluoroborate, 1-ethyl-3-methylimidazolium ethyl sulfate, 1-butyl-3-methylimidazolium triflate, 1-butyl-3-methylimidazolium acetate, 1-butyl-3-methylimidazolium trifluoroacetate, and 1-butyl-3-methylimidazolium bis(trifluoromethanesulfonimide). In particular, methyltrioctylammonium chloride.

The ILs of the present invention can be prepared by any of the preparation methods described in the scientific literature, such as metathesis with a halide salt and through acid-base neutralization reactions.

In a preferred embodiment, the DES used in the present invention are compounds whose general formula is:

Cat+X-zY

wherein:
Cat+ is selected from an ammonium, phosphonium, or sulfonium cation;
X is selected from Lewis bases, generally a halide anion;
Y is selected from a Lewis or Bronsted acid;
z refers to the number of Y molecules that make up the DES and ranges between 0.01 and 100, more preferably between 0.1 and 10.

Based on the general formula, DES can be classified into four types that can be applied in the present invention and are detailed below:
- Type I, whose general formula is Cat+X-zMClx where M includes Zn, Sn, Fe, Al, Ga, In, Ag, Cu, Li, Cd, Zn, La, Y, and Sn.
- Type II, whose general formula is Cat+X-zMClx'yH2O where M includes Cr, Co, Cu, Ni, and Fe.
- Type III, whose general formula is Cat+X-zRZ where RZ is a hydrogen bond donor, such as amides, carboxylic acids with 1 to ten linear or branched carbon atoms, and alcohols with 1 to ten linear or branched carbon atoms, so Z can include CONH2, COOH, and OH.
- Type IV, whose general formula is MClx'+RZ=MClx-1 + RZ + MClx+1 where M includes Al and Zn and where RZ is a hydrogen bond donor, such as amides and alcohols, so Z can include CONH2 and OH.

In a preferred embodiment, the non-perfluorinated organic polymer is selected from:
i) Polyvinyl chloride (PVC);
ii) Polystyrene (PS);
iii) Cellulose acetate (CA);
iv) Cellulose acetate propionate (CAP);
v) Acetato butirato de celulosa (CAB);
vi) Poly(butylene adipate-co-terephthalate) (PBAT);
vii) Polyethersulfone (PES);
viii) Polypropylene (PP);
ix) Polyethylene oxide (PEO);
x) Poly(methyl methacrylate) (PMMA);
xi) Poly(butyl methacrylate-co-methyl methacrylate) (PBMMA);
xii) Poly(methyl methacrylate-co-methacrylic acid) (PMMAM);
xiii) Polyurethane (PU);
xiv) Polyacrylic acid (PAA);
xv) Polyethyl methacrylate (PEMA);
and on the other hand, conductive polymers such as polyaniline (PANI), polypyrroles, and polythiophenes. The use of conductive polymers is of great interest due to their low cost, high conductivity, and good redox behavior.

Preferably, the weight percentage of ionic liquid and/or DES relative to non-perfluorinated organic polymer is in a range between 30% and 80%; preferably between 50% and 70%.

Preferably, the mixture can also be poured directly onto a diffusion layer, such as a carbon cloth, thus obtaining a membrane assembled to the electrode (MEA).

Preferably, the membrane can also be formed on a conductive carbon cloth or any other conductive material.

In a preferred embodiment, nanoparticles of organic, inorganic, metallic, and/or a mixture of these can be used. The use of nanoparticles increases the chemical, mechanical stability, and ionic conductivity of these materials.

Preferably, the catalytic membrane is assembled to an electrode.

### BRIEF DESCRIPTION OF THE DRAWINGS

FIG 1. Drawing of the membrane with occluded metal oxide particles.
FIG 2. Diagram of the parts of a hydrogen fuel cell (PCH) or water electrolyzer for hydrogen production (EH).
FIG 3. Power curves for an MFC containing the membrane with 70% [MTOA+][Cl-] and 30% PVC and an occluded Cu and Co oxide (•) and platinum catalyst and Nafion membrane (■).
FIG 4. Power curves for an MFC containing the membrane with 70% [P14,14,14,1+][TOS-] and 30% cellulose acetate and cobalt (II) porphyrin.
FIG 5. Power curves for an MFC containing the membrane with 60% of the eutectic solvent Choline Lactate - 40% cellulose acetate and a mixed Cu and Co oxide in a single-chamber microbial fuel cell.

### PREFERRED EMBODIMENT OF THE INVENTION

### Example 1

### Preparation of a membrane composed of 70% [MTOA+][Cl-] - 30% PVC and a mixed oxide of Cu and Co obtained by calcination

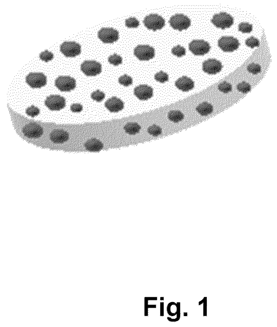

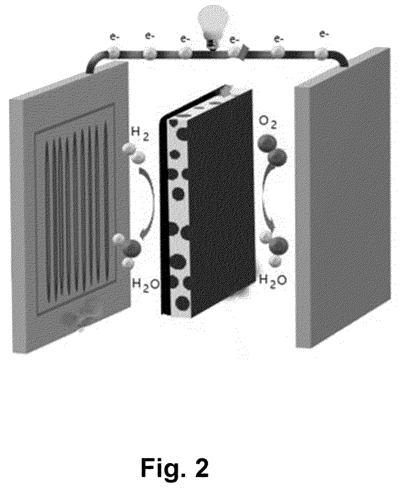

For the preparation of mixed oxides, the corresponding metal chlorides in a 9:1 molar ratio of CoCl2/CuCl2 were used. The appropriate amounts were mixed in distilled water until a homogeneous solution was achieved. Subsequently, the coprecipitates of cobalt and copper hydroxides were obtained by adding 5M NaOH until reaching pH 13, stirring the mixture for 7 hours at 25 °C. The corresponding hydroxides were separated from the supernatant by centrifugation for 15 minutes at 2500 r.p.m. and after removing the supernatant, they were dried at 60 °C for 8 hours. 10 mg of the formed hydroxides were mixed with 210 mg of the ionic liquid methyltrioctylammonium chloride ([MTOA +][Cl-]) and heated to 200 °C for 8 hours under oxidizing conditions to produce the metal oxides. The resulting oxide mixture and ionic liquid were mixed with 90 mg of polyvinyl chloride (PVC). 3 ml of tetrahydrofuran (THF) was added to the mixture to facilitate the codissolution of ([MTOA+][Cl-]) and PVC. The entire mixture was added to a glass ring with an inner diameter of 28 mm and a height of 30 mm. The membrane was obtained by evaporating the THF, using casting, at room temperature for 24 hours. The membrane with immobilized mixed oxide is shown in Figures 1 and 2. The membrane was formed on a conductive carbon cloth by placing it in a glass ring on this material during the ionogel casting process.

### Example 2

Use of the ionogel composed of 70% [MTOA+][Cl-] - 30% PVC and 10 mg of mixed Co and Cu oxides as catalytic membranes in single-chamber microbial fuel cells.

The catalytic membrane used was prepared according to the method described in Example 1.

Single-chamber microbial fuel cells were constructed with two 250 mL jacketed glass bottles (Schott Duran^{®}, Germany), modified with a cylindrical flange. The jackets have a capacity of 150 mL and a thermostatic liquid circulates through them to control the reactor temperature at 30°C. The fuel added in the glass flask or "anodic chamber" consists of 200 mL of wastewater from the inlet waters of a WWTP of a farm with a COD of 2540 mg L-1. All experiments were conducted in batch mode, with the wastewater being the only fuel and source of microorganisms. The anode of the anodic chamber consisted of 100 grams of graphite granules with a diameter of 2 mm and a graphite rod with a diameter of 3.18 mm, which serves to connect with the cathode terminal through a 1 kΩ resistor. The membrane with the immobilized catalyst (formed on a conductive carbon cloth) acting as both PEM and cathode was placed on the glass cylindrical flange. The assembly was fixed on the circular flange using a round clamp. The same experiment was conducted with a system composed of a Nafion membrane and Pt as a catalyst, as a comparative example of the invention. The Nafion was activated before use and the Pt was sprayed onto a carbon cloth to achieve a dispersion of 0.5 mg/cm2.

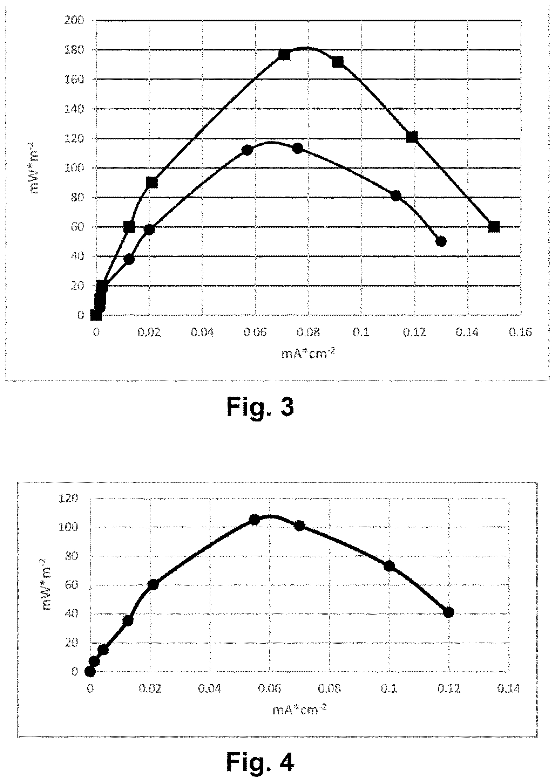

Figure 4 shows the power curve for an MFC containing the membrane of the invention, composed of ionic liquid and the catalyst based on occluded Co and Cu metal oxides (circles) and for the Nafion membrane and platinum catalyst (squares). The maximum power for the catalytic membrane prepared according to the procedure of this invention has a maximum power of 118mW/m2, while the maximum power obtained using the platinum catalyst and Nafion membrane system was 183mW/m2. It is also noteworthy that the ionogel does not present microbial fouling problems, so it can be considered to have antifouling properties. In terms of water purification, a COD reduction of 50% at 96h is achieved in our system, and 55% at 96h for the platinum catalyst and Nafion membrane system.

### Example 3

### Preparation of a Membrane Composed of 60% [P14,14,14,1+][TOS-] - 40% Cellulose Acetate and Pyrolyzed Cobalt(II) Porphyrin

To prepare this membrane, 20 mg of cobalt(II) porphyrin were mixed with 210 mg of the ionic liquid tritetradecylmethyl ammonium tosylate ([P14,14,14,1+][TOS-]). The mixture was subjected to pyrolysis at 200°C, affecting only the cobalt porphyrin due to the stability of the ionic liquid at that temperature. The pyrolyzed mixture was combined with 90 mg of cellulose acetate (CA) and 3 ml of tetrahydrofuran (THF) to facilitate codissolution. The entire mixture was added to a glass ring with an inner diameter of 28 mm and a height of 30 mm. The membrane was obtained by evaporating the THF through "casting" at room temperature for 24 hours.

### Example 4

### Use of lonogel Composed of 70% [P14,14,14,1+][TOS-] - 30% Cellulose Acetate and Cobalt(II) Porphyrin as Catalytic Membranes in Single-Chamber Microbial Fuel Cells

The synthesis procedure followed was the same as described in Example 3.

Single-chamber microbial fuel cells were constructed with two 250 mL jacketed glass flasks (Schott Duran^{®}, Germany), modified with a cylindrical flange. The experiments were conducted at 30°C. The fuel added to the glass flask or "anodic chamber" consisted of 200 mL of wastewater from the influent of a wastewater treatment plant of a farm with a COD of 2540 mg L-1. The anode in the anodic chamber consisted of 100 grams of 2 mm diameter graphite granules and a 3.18 mm diameter graphite rod, which serves to connect to the cathode terminal through a 1 kΩ resistor. The ionogel, formed by 70% [P14,14,14,1+][TOS-] - 30% cellulose acetate and cobalt(II) porphyrin, was placed on a conductive carbon cloth in the cylindrical glass flange. The membrane acts simultaneously as a PEM and a cathode. The assembly is fixed onto the circular flange using a round clamp.

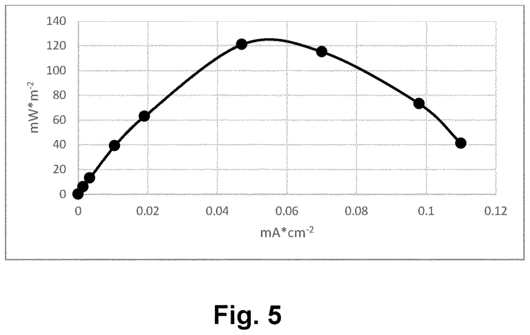

Figure 5 shows the power curve for an MFC containing the membrane composed of [P14,14,14,1+][TOS-] - 30% cellulose acetate and cobalt(II) porphyrin. The system yielded a maximum power of 109 mW/m2. No microbial fouling issues were observed during the test, indicating antifouling properties. Regarding water purification, a COD reduction of 49% was achieved at 96 hours.

### Example 5

### Preparation of a Membrane Composed of 60% Choline Lactate Eutectic Solvent - 40% Cellulose Acetate and a Mixed Oxide of Cu and Co

For the preparation of the mixed oxides, the corresponding metal chlorides were used in a 9:1 molar ratio of CoCl2/CuCl2, following the methodology described in Example 1. Choline lactate is obtained by mixing choline chloride and lactic acid in a 1:2 ratio and then heating the mixture to 200°C. Dissolution between the eutectic solvent and the non-perfluorinated organic polymer was achieved by adding 3 ml of tetrahydrofuran (THF). The entire mixture was added to a glass ring with an inner diameter of 28 mm and a height of 30 mm. The membrane was obtained by evaporating the THF through "casting" at room temperature for 24 hours.

### Example 6

### Use of the Membrane Composed of 60% Choline Lactate Eutectic Solvent - 40% Cellulose Acetate and a Mixed Oxide of Cu and Co in a Single-Chamber Microbial Fuel Cell

The catalytic membrane used was prepared according to the method described in Example 5 and tested as a proton exchange membrane with catalytic properties in a single-chamber microbial fuel cell or air cathode, as described in Example 1. The power generation results are shown in Figure 6.

The membrane presents a maximum power of 125 mW/m2. It is also noteworthy that no microbial fouling issues were observed, indicating antifouling properties. Regarding water purification, a COD reduction of 53% was achieved at 96 hours.

## Claims

1. Process for obtaining proton exchange catalytic membranes **characterized by** comprising the following stages:
a) Mixing at least one metal compound, precursor of a catalyst for reactions of synthesis of H₂O from oxygen and hydrogen and decomposition of H₂O to generate hydrogen and oxygen, with at least one ionic liquid and/or a deep eutectic solvent, where the metal of the metal compound is neither Au, Pt, Rh, Ru, Ir, Os, nor Pd;
b) activating the catalyst by calcination and/or pyrolysis at a temperature between 100°C and 500°C of the mixture obtained in stage a);
c) mixing the product obtained in the previous stage with a non-perfluorinated organic polymer by adding a co-solvent to facilitate dissolution;
d) pouring the previous mixture onto a surface to allow evaporation of the co-solvent and formation of the membrane with the occluded catalyst.

2. Process for obtaining a catalytic membrane according to claim 1, **characterized in that** the proportion of ionic liquid and/or deep eutectic solvent relative to the non-perfluorinated organic polymer is in a range between 30% and 80%.

3. Process for obtaining a catalytic membrane according to any of claims 1 to 2, **characterized in that** the ratio between the catalyst precursor and the ionic liquid and/or deep eutectic solvent is in a range between 0.01% w/w and 5% w/w.

4. Process for obtaining a catalytic membrane according to any of claims 1 to 3, **characterized in that** the organic co-solvent is tetrahydrofuran.

5. Process for obtaining a catalytic membrane according to any of claims 1 to 4, **characterized in that** the metal compounds are selected from nitrogenated compounds coordinated to metals, metals coordinated to conductive polymers, and metal salts.

6. Process for obtaining a catalytic membrane according to any of claims 1 to 5, where the ionic liquids are chosen from aromatic and quaternary heterocycles of 5 and 6 members, non-aromatic heterocycles of 5 and 6 members, quaternary ammonium salts, quaternary phosphonium salts, and ternary sulfonium salts.

7. Process for obtaining a catalytic membrane according to any of claims 1 to 6, **characterized in that** the deep eutectic solvents are selected from those of general formula:
Cat+X-zY
wherein:
Cat+ is an ammonium cation, phosphonium cation, or sulfonium cation;
X is a Lewis base;
Y is a Lewis or Bronsted acid;
z refers to the number of Y molecules.

8. Process for obtaining a catalytic membrane according to any of claims 1 to 7, **characterized in that** the organic polymers are selected from polyvinyl chloride, polystyrene, cellulose acetate, cellulose propionate acetate, cellulose butyrate acetate, poly(butylene adipate-co-terephthalate), polyethersulfone, polypropylene, polyethylene oxide, polymethyl methacrylate, poly(butyl methacrylate-co-methyl methacrylate), polymethyl methacrylate-co-methacrylic acid, polyurethane, polyacrylic acid or polyethyl methacrylate.

9. Catalytic membrane obtainable according to the process described in claims 1-8.

10. Use of the catalytic membrane defined in claim 9 in devices employing proton exchange membranes.

11. Use of the catalytic membrane defined in claim 9 in fuel cells.

12. Use of the catalytic membrane defined in claim 9 according to claim 10 where the membrane is assembled to the electrode.

13. Use of the membrane defined in claim 9 in water electrolyzers for hydrogen production.

14. A hydrogen fuel cell (HFC) comprising the membrane according to claim 9.

15. Electrolyzer for hydrogen production (HE) comprising the membrane according to claim 9.
